# EUROPÄISCHE PATENTANMELDUNG

(11) **EP 0 795 469 A1**
(43) Veröffentlichungstag der Anmeldung: **17.09.1997**
(21) Anmeldenummer: 97102374.2
(22) Anmeldetag: 14.02.1997
(51) Int. Cl.: B64D 25/00

(54) **Fluchtwegbeleuchtungs- und Leitsystem in Passagierkabinen, insbesondere für Passagierflugzeuge**

(30) Priorität: 15.03.1996 DE 19610147
(71) Anmelder: Daimler-Benz Aerospace Airbus Gesellschaft mit beschränkter Haftung, 21129 Hamburg (DE)
(72) Erfinder: Schumacher, Markus, 21614 Buxtehude (DE); Muin, Andrew, 21614 Buxtehude (DE); Lau, Michael, 21739 Dollern (DE)
(74) Vertreter: Hansmann, Dierk, Dipl.-Ing.

(57) **Zusammenfassung**

Bei einem Fluchtwegbeleuchtungs- und Leitsystem in Passagierkabinen, insbesondere für Passagierflugzeuge, wobei Markierungspfade im Bereich des Flugzeugganges angeordnet sind, besteht die Erfindung darin, daß der Markierungspfad im wesentlichen aus mindestens einem Lichtleitkabel (8) gebildet ist, wobei in zumindest ein Leitungsende eine Lichteinspeisung von mindestens einem Lichtgenerator (7A) erfolgt.

Damit ist erreicht, daß eine nahezu störungsfreie Funktion der Fluchtwegbeleuchtung gewährleistet wird, wobei der Wartungsaufwand des Systems erheblich verringert ist und Ausfälle oder große Stillstandszeiten eines Flugzeuges vermieden werden.

## Beschreibung

Die Erfindung betrifft ein Fluchtwegbeleuchtungs- und Leitsystem in Passagierkabinen, insbesondere für Passagierflugzeuge, wobei Markierungspfade im Bereich des Flugzeugganges angeordnet sind.

Bei einem derartigen allgemein bekannten Fluchtwegbeleuchtungs- und Leitsystem - im folgenden nur Fluchtwegbeleuchtungssystem genannt -, welches beispielsweise in einer Passagierkabine eines Flugzeuges zur Anwendung kommt, sind als Leuchtmittel kleinste Glühlampen oder unter elektrischer Spannung fluoreszierende Leuchtstreifen vorgesehen, deren Energiezufuhr von einem akkumulatorbetriebenen System mit 6V Betriebsspannung erfolgt. Dieses unabhängig vom allgemeinen Energieversorgungssystem im Flugzeug vorhandene Notversorgungssystem ermöglicht, daß bei Ausfall der regulären Beleuchtung den Passagieren eine Orientierung ermöglicht wird. In Decken- und Verkleidungsteilen der Passagierkabine sowie im gangzugewandten Teil der Sitze befinden sich Lichtquellen, wie Glühlampen mit 6V-Betriebsspannung. Beleuchtete Markierungspfade, die vorteilhafterweise beidseitig des Flugzeuglängsganges angeordnet sind, weisen den Passagieren im Notfall den Fluchtweg zu den Notausstiegen.

Die bekannten Fluchtwegbeleuchtungssysteme verwenden als Markierungspfade mehrteilige Kunststoffprofile, die mit den Fußbodenplatten verklebt sind. Die Höhe des abdeckenden Kunststoffprofiles entspricht in etwa der Stärke des angrenzenden Teppichbelages. In die lichtdurchlässigen Kunststoffprofile sind Kleinstglühlampen oder unter elektrischer Spannung fluoreszierende Leuchtstreifen integriert. Die elektrische Versorgung der Markierungspfade erfolgt ausgehend vom 6V-Energieversorgungssystem, deren Zuleitungen vorzugsweise hinter Verkleidungsteilen der Passagierkabine angeordnet sind, über Flachbandkabel, die an das Kunststoffprofil herangeführt werden und mittels flacher Anschlußstecker die Leuchtmittel mit Energie versorgen. Problematisch ist bei dieser Form der Markierungspfade, daß das Kunststoffprofil, der Anschlußstecker sowie die Zuleitung gegen starke Beanspruchung und Verschmutzung geschützt sein müssen. Da diese Teile im Fußbodenbereich angeordnet sind, sind Abdichtungen als Schutz vor verschütteten Flüssigkeiten an ihnen notwendig. Durch das Drauftreten mit Schuhen oder Überfahren der Kunstoffprofile mit Trolleys können die Abdichtungen verletzt werden oder sogar die Kunstoffprofile zerstört werden. Somit besteht ein hoher Wartungsaufwand, um die Funktion des Fluchtwegbeleuchtungssystems immer zu gewährleisten, da oft kaputte Anschlußstecker oder zerstörte Kunststoffprofile mit den integrierten Leuchtmitteln ausgetauscht werden müssen.

Demgemäß liegt der Erfindung die Aufgabe zugrunde, ein gattungsgemäßes Fluchtwegbeleuchtungssystem so zu gestalten, daß eine nahezu störungsfreie Funktion der Fluchtwegbeleuchtung gewährleistet wird, wobei der Wartungsaufwand des Systems erheblich zu verringern ist und somit Ausfälle oder große Stillstandszeiten eines Flugzeuges vermieden werden.

Diese Aufgabe wird mit den in Patentanspruch 1 angegebenen Maßnahmen gelöst.

Dabei ist insbesondere von Vorteil, daß mit der erfindungsgemäßen Ausbildung des Fluchtwegbeleuchtungssystems eine nahezu störungsfreie Funktion einer Fluchtwegbeleuchtung bzw. eines Leitsystems gewährleistet ist.

Weiterbildungen und zweckmäßige Ausgestaltungen ergeben sich aus den Unteransprüchen 2 - 12.

Die Erfindung wird nachstehend beschrieben, wobei die Ausbildung eines Fluchtwegbeleuchtungssystems anhand des in der Zeichnung dargestellten Ausführungsbeispiels näher erläutert ist. In den Figuren sind gleiche Bauteile mit gleichen Bezugszeichen versehen.

Die Zeichnung zeigt
- in Fig. 1: ein Fluchtwegbeleuchtungssystem mit seinen Elementen in einer Passagierkabine eines Flugzeuges,
- in Fig. 2: einen Querschnitt im Fußbodenbereich der Passagierkabine zur Verdeutlichung der Lage der Lichtleitkabel,
- in Fig. 2A: eine Einzelheit II gemäß der Fig. 2, die eine mögliche Ausbildung eines Lichtleitkabels beinhaltet,
- in Fig. 2B: eine weitere Ausbildung eines Lichtleitkabels als Flachband,
- in Fig. 3A: eine weitere Anordnungsmöglichkeit von Markierungspfäden in einem Flugzeug,
- in Fig. 3B: eine Anordnungsmöglichkeit von Lichtleitkabeln im Längskanal und
- in Fig. 4: Installationsmöglichkeiten von Lichtleitkabeln für bestimmte Beleuchtungsstrecken.

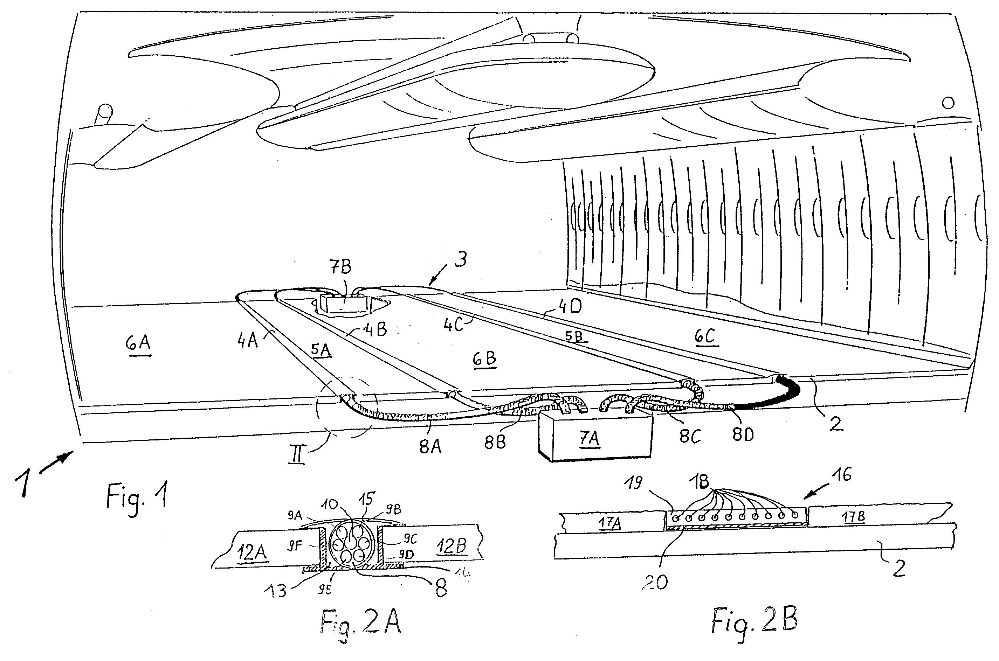

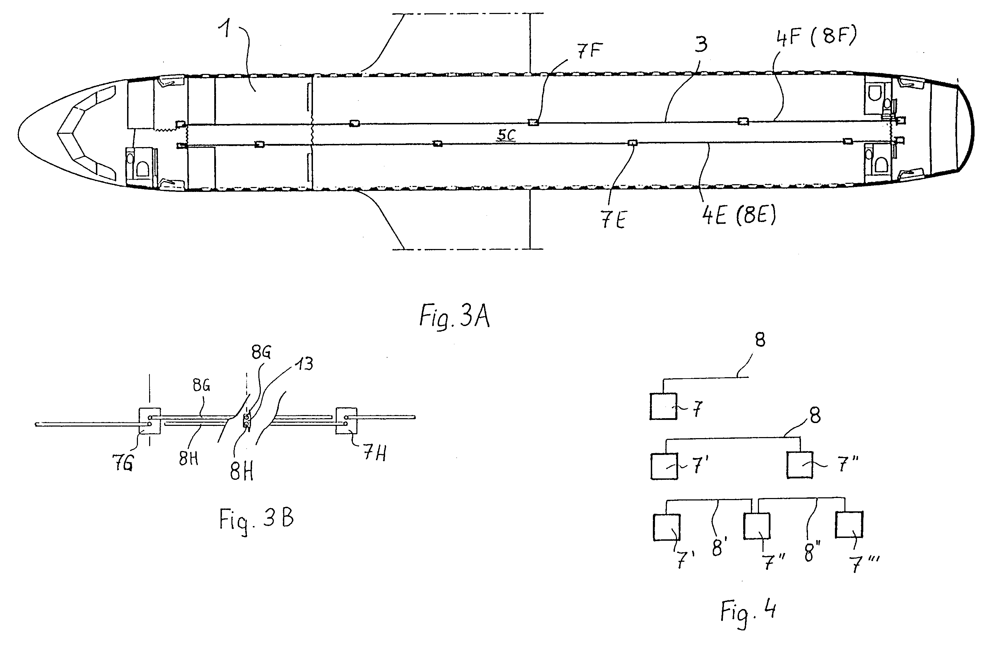

In Fig. 1 ist eine Passagierkabine 1 eines Passagierflugzeuges in einer perspektivischen Darstellung ersichtlich. In der Passagierkabine 1 ist ein Fluchtwegbeleuchtungssystem 3 angeordnet, welches den Passagieren im Notfall den Fluchtweg zu den Notausstiegen weist.
Als eine weitere Anwendungsmöglichkeit ist dieses Fluchtwegbeleuchtungssystem auch für Leitaufgaben innerhalb eines Leitsystems geeignet.
Beleuchtete Markierungspfade 4A bis 4D sind vorteilhafterweise beidseitig eines Flugzeuglängsganges 5A, 5B im Fußboden 2 der Passagierkabine 1 angeordnet. Die Sitzbereiche 6A, 6B, 6C sind beidseitig dieser Gänge vorgesehen, wobei die Sitze nicht in der Zeichnung dargestellt sind. Die Markierungspfade 4A, 4B, 4C und 4D sind erfindungsgemäß mit Lichtleitkabeln ausgestattet.
Lichtleitkabel sind in der bevorzugten Ausgestaltung als illuminierende Lichtwellenleiter 8A, 8B, 8C, 8D ausgebildet. Sie werden von Lichtgeneratoren 7A, 7B mit Licht versorgt. Die Lichtgeneratoren 7A, 7B sind ebenfalls in der Nähe des Fußbodens 2 der Passagierkabine 1 angeordnet, wobei sie vorzugsweise so positioniert sind, daß gleichzeitig mehrere parallel verlaufende Lichtleitkabel von einem Lichtgenerator versorgt werden können. Die Anordnung der Lichtgeneratoren 7A, 7B ist im oder unterhalb des Fußbodens 2 vorgesehen. Die Lichtgeneratoren 7A, 7B können vorteilhaft über ein Energieversorgungssystem mit Energie versorgt werden, deren Leitungen vorzugsweise unterhalb des Fußbodens verlaufen. Leitungen und Anschlußstecker sind somit nicht im Passagierbereich zugänglich und damit nicht beschädigungsanfällig. In der gezeigten Ausführung ist der Lichtgenerator 7A mit einem Ende der Lichtwellenleiter 8A, 8B, 8C, 8D verbunden. Mit einer Lichteinkopplung von einer Seite können die Lichtleitkabel nach dem bisher bekannten Stand der Technik bis zu einer Länge von ca. 10 m erleuchtet werden. Bei einer Lichteinkopplung von zwei Seiten, wie es in der Fig. 1 ersichtlich ist, können bei der Anwendung dieser bekannten Technik Entfernungen bis zu ca. 30 m überbrückt werden. Hierzu ist der Lichtgenerator 7B am entgegengesetzten Ende der Lichtwellenleiter 8A, 8B, 8C, 8D mit deren Enden verbunden. Schematisch sind diese Möglichkeiten zur Überbrückung verschiedener Längen in Fig. 3 dargestellt.
In Fig. 2A ist eine Einzelheit II aus Fig. 1 ersichtlich, die einen Querschnitt eines Lichtwellenleiters 8 zeigt. Er besteht im wesentlichen aus einem reflektierenden Kern 10, um die kreisringförmig Lichtleitfaserbündel 9A bis 9F angeordnet sind. Eine Ummantelung 11, vorzugsweise aus einem klaren, UV-beständigen PVC-Material, umschließt die Lichtleitfaserbündel 9A bis 9F. Aus der Fig. 2 ist weiterhin entnehmbar, wie die Markierungspfade 4 konstruktiv gestaltet sein können. Zwischen zwei benachbarten Bodenplatten 12A und 12B ist ein Längskanal 13 eingebracht, der den Aufnahmebereich für das Lichtleitkabel bildet. Der Längskanal 13 ist vorzugsweise mit einer u-förmigen Profilleiste 14 versehen, in die der jeweilige Lichtwellenleiter 8 eingelegt wird. Über den offenen Bereich des Längskanals 13 ist eine lichtdurchlässige Abdeckleiste 15 aufgebracht, die verhindert, daß Schmutz in den Längskanal 13 gelangt und der offene Bereich zu einer Sturzgefahr für Passagiere wird, die aufgrund der Unebenheit im Fußboden 2 stolpern würden. Da die Lichtwellenleiter 8A bis 8D unempfindlich gegen Feuchtigkeit und starker Beanspruchung sind und selbst bei teilweiser Zerstörung von Lichtleitfaserbündeln 9 funktionieren, sind die Abdeckleisten 15 aber nicht mehr aufwendig abzudichten und beeinträchtigen bei einer Zerstörung keinesfalls die Funktionsfähigkeit der Fluchtwegbeleuchtung.
In der Fig. 2B ist eine weitere Ausführungsform eines Lichtwellenleiters 16 gezeigt, die in der Ausbildung als Flachband eine Alternativlösung zum runden Lichtwellenleiter 8 ist.
Der Lichtwellenleiter 16 ist so flach ausgebildet, daß er vorzugsweise der Teppichhöhe des angrenzenden Fußbodenbelags 17A, 17B entspricht. Am Fußboden 2 ist es daher nicht nötig, Längskanäle für den Lichtwellenleiter vorzusehen. Der als Flachband ausgebildete Lichtwellenleiter 16 ist auf dem Fußboden angebracht, d. h. vorzugsweise aufgeklebt. Die Lichtleitfaserbündel 18 sind in dieser Ausführung in einer Ebene angeordnet und vorzugsweise in einem flachen PVC-Profil 19 eingebracht. Unterhalb dieser Ebene ist ein Reflektor 20 vorgesehen, um das aus den Lichtleitfaserbündeln 18 austretende Licht in Richtung Passagierraum zu lenken.

In Fig. 3A ist eine Anordnung der Fluchtwegbeleuchtung 3 innerhalb der Passagierkabine 1 in einer Ausführungsform gezeigt, in der Markierungspfade 4E und 4F, die links und rechts eines Ganges 5C verlaufen, mittels überlappender Lichtwellenleiter 8E und 8F gebildet sind. Der Lichtwellenleiter 8E wird dabei von Lichtgeneratoren 7E gespeist, die versetzt zu Lichtgeneratoren 7F, welche zur Speisung der Lichtwellenleiter 8F vorgesehen sind, längs des Ganges 5C angeordnet sind. Damit wird erreicht, daß entlang des Ganges eine redundate Anordnung der Lichtwellenleiter 8E und 8F erfolgt und somit eine hohe Zuverlässigkeit der Fluchtwegbeleuchtung erreicht ist.

Um die Zuverlässigkeit der Fluchtwegbeleuchtung noch weiter zu erhöhen, können - wie in Fig. 3B gezeigt - in den Längskanal 13 zumindest zwei parallel verlaufende Lichtleitkabel 8G und 8H eingebracht werden. Diese Lichtleitkabel 8G und 8H sind vorzugsweise überlappend angeordnet und zumindest in ein Leitungsende des jeweiligen Lichtleitkabels 8G oder 8H wird von separaten Lichtgeneratoren 7G oder 7H Licht eingespeist. Mit einer solchen redundanten Ausgestaltung sind Ausfälle der Fluchtwegbeleuchtung nahezu ausgeschlossen.

In Fig. 4 sind mögliche Ausgestaltungen der Verbindung von illuminierenden Lichtwellenleitern 8 zum Lichtgenerator 7 in einer schematischen Darstellung ersichtlich, die eine ausreichende Leuchtkraft der Lichtwellenleiter über längere Beleuchtungsstrecken ermöglichen. Mit den bisher bekannten Ausführungen von illuminierenden Lichtwellenleitern 8 ist von einem einzelnen Lichtgenerator 7 nur eine begrenzte Strecke mit ausreichender Leuchtkraft vorhanden, wie im ersten Beispiel dargestellt. Eine Verlängerung der Beleuchtungsstrecken kann durch ein reflektierendes Ende erfolgen, d.h. das der Lichteinspeisung entgegengesetzte Ende eines Lichtwellenleiters 8 ist mit Mitteln zur Reflexion, beispielsweise Spiegel ausgestattet.
Für die Überbrückung längerer Strecken ist eine Einspeisung von Licht in den Lichtwellenleiter 8 mittels Lichtgeneratoren 7' und 7'' von beiden Enden des Lichtwellenleiters 8 möglich, wie das zweite Beispiel zeigt. Werden jeweils die Enden zweier aneinander anschließender (in Reihe geführter) Lichtwellenleiter 8', 8'' in die Lichteinkopplung eines Lichtgenerator 7'' eingeführt, so sind Entfernungen beliebiger Länge zu überbrücken. Eine solche Ausbildung ist im dritten Beispiel der Fig. 4 ersichtlich.

## Patentansprüche

1. Fluchtwegbeleuchtungssystem in Passagierkabinen, insbesondere für Passagierflugzeuge, wobei zumindest ein Markierungspfad im Bereich des Flugzeugganges angeordnet ist, **dadurch gekennzeichnet, daß** der Markierungspfad (4A, 4B, 4C, 4D) im wesentlichen aus mindestens einem Lichtleitkabel (8; 8A, 8B, 8C, 8D; 8E, 8F) gebildet ist, wobei in zumindest ein Leitungsende eine Lichteinspeisung von mindestens einem Lichtgenerator (7A, 7B; 7E, 7F) erfolgt.

2. Fluchtwegbeleuchtungssystem nach Anspruch 1,
**dadurch gekennzeichnet, daß**
das Lichtleitkabel (8, 16) aus illuminierenden Lichtwellenleitern besteht.

3. Fluchtwegbeleuchtungssystem nach einem der Ansprüche 1 oder 2,
**dadurch gekennzeichnet, daß**
der illuminierende Lichtwellenleiter (8) im wesentlichen aus einem reflektierenden Kern (10) besteht, um den kreisringförmig Bündel von Lichtleitfasern (9A bis 9F) angeordnet sind, die von einer klaren PVC-Ummantelung (11) umhüllt sind.

4. Fluchtwegbeleuchtungssystem nach einem der Ansprüche 1 bis 3,
**dadurch gekennzeichnet, daß**
das Lichtleitkabel (8) im Fußbodenbereich entlang des Ganges in mindestens einen Längskanal (13) eingebracht ist, wobei auf den offenen Bereich des Längskanals (13) mindestens eine lichtdurchlässige Abdeckleiste (15) befestigt ist.

5. Fluchtwegbeleuchtungssystem nach einem der Ansprüche 1 bis 4,
**dadurch gekennzeichnet, daß**
in den Längskanal (13) eine u-förmige Profilleiste (14) eingebracht ist.

6. Fluchtwegbeleuchtungssystem nach einem der Ansprüche 1 oder 2,
**dadurch gekennzeichnet, daß**
der illuminierende Lichtwellenleiter (16) im wesentlichen als Flachband ausgebildet ist und aus in einer Ebene angeordneten Bündeln von Lichtleitfasern (18) besteht, die auf einem Reflektor (20) angebracht sind.

7. Fluchtwegbeleuchtungssystem nach Anspruch 6,
**dadurch gekennzeichnet, daß**
das Flachband (16) mittels Kleber auf den Fußboden (2) aufbringbar ist.

8. Fluchtwegbeleuchtungssystem nach einem der Ansprüche 6 oder 7,
**dadurch gekennzeichnet, daß**
das Flachband (16) eine Höhe besitzt, die der Teppichhöhe des angrenzenden Fußbodenbelags (17A, 17B) entspricht.

9. Fluchtwegbeleuchtungssystem nach einem der Ansprüche 1 bis 8,
**dadurch gekennzeichnet, daß**
die Leitungsenden zweier in Reihe angeordneter Lichtleitkabel (8', 8'') zu einem gemeinsamen Lichtgenerator (7'') führen.

10. Fluchtwegbeleuchtungssystem nach einem der Ansprüche 1 bis 9,
**dadurch gekennzeichnet, daß**
die Leitungsenden zumindest zweier parallel verlaufender Lichtleitkabel (8A, 8B, 8C, 8D) zu einem gemeinsamen Lichtgenerator (7A) führen.

11. Fluchtwegbeleuchtungssystem nach einem der Ansprüche 1 bis 10,
**dadurch gekennzeichnet, daß**
in den Längskanal (13) zumindest zwei parallel verlaufende Lichtleitkabel (8G, 8H) eingebracht sind, wobei die Lichtleitkabel (8G, 8H) überlappend angeordnet sind und die Leitungsenden des jeweiligen Lichtleitkabels (8G, 8H) zu separaten Lichtgeneratoren (7G, 7H) führen.

12. Fluchtwegbeleuchtungssystem nach einem der Ansprüche 1 bis 10,
**dadurch gekennzeichnet, daß**
Markierungspfade (4E, 4F) entlang eines Ganges (5C) aus Lichtwellenleitern (8E, 8F) bestehen, wobei der Lichtwellenleiter (8E) auf einer Seite des Ganges (5C) mit Lichtgeneratoren (7E) verbunden ist und der Lichtwellenleiter (8F) auf der anderen Seite des Ganges (5C) mit Lichtgeneratoren (7F) verbunden ist, wobei die Lichtgeneratoren (7E, 7F) zueinander alternierend angeordnet sind.
